# EUROPÄISCHE PATENTSCHRIFT

(11) **EP 4 100 695 B1**
(45) Veröffentlichungstag und Bekanntmachung des Hinweises auf die Patenterteilung: **24.09.2025**
(21) Anmeldenummer: 21704257.1
(22) Anmeldetag: 08.02.2021
(51) Int. Cl.: G01C 11/08, G01C 21/00

(54) **VERFAHREN ZUR GEOREFERENZIERUNG VON FERNERKUNDUNGSDATEN**
METHOD FOR GEOREFERENCING OF REMOTE SENSING DATA
PROCÉDÉ DE GÉORÉFÉRENCEMENT DE DONNÉES DE TÉLÉDÉTECTION

(30) Priorität: 07.02.2020 DE 102020201496
(43) Veröffentlichungstag der Anmeldung: 14.12.2022
(73) Patentinhaber: Fraunhofer-Gesellschaft zur Förderung der angewandten Forschung e.V., 80686 München (DE)
(72) Erfinder: GULDE, Max, 79104 Freiburg (DE)
(74) Vertreter: Pfenning, Meinig & Partner mbB
(86) Internationale Anmeldenummer: PCT/EP2021/052981
(87) Internationale Veröffentlichungsnummer: WO 2021/156512

(56) Entgegenhaltungen:
- WO-A1-2019/215210
- BEHLING ROBERT ET AL: "Robust Automated Image Co-Registration of Optical Multi-Sensor Time Series Data: Database Generation for Multi-Temporal Landslide Detection", REMOTE SENSING, vol. 6, no. 3, 21 March 2014 (2014-03-21), pages 2572 - 2600, XP055799446, DOI: 10.3390/rs6032572
- VICTOR JUNG-DER TSAI ET AL: "Automated image mosaicking", JOURNAL OF THE CHINESE INSTITUTE OF ENGINEERS - ZHONGGUO GONGCHENG XUEKAN, vol. 28, no. 2, 1 March 2005 (2005-03-01), GB, pages 329 - 340, XP055402044, ISSN: 0253-3839, DOI: 10.1080/02533839.2005.9670998

## Beschreibung

Die Erfindung betrifft ein Verfahren zur Georeferenzierung von Fernerkundungsdaten einer Fernerkundungsplattform. Dabei wird durch die Fernerkundungsplattform ein Fernerkundungsdatensatz aufgenommen, der einen Sichtbereich der Erdoberfläche abbildet, und mithilfe eines Referenzdatensatzes mit bekannter Georeferenzierung eine Georeferenzierung des Fernerkundungssatzes ermittelt.

Fernerkundung, z. B. aus dem Weltraum, ist ein unschätzbar wertvolles Werkzeug, um den Zustand unseres Planeten quantitativ wie qualitativ zu erfassen und ermöglicht eine Vielzahl fundamentaler Anwendungen über fast alle Technologiesektoren hinweg (PWC, "Copernicus ex-ante benefits assessment Final report," 2017; M. Craglia et al., "Digital Earth 2020: Towards the vision for the next decade," Int. J. Digit. Earth, vol. 5, no. 1, pp. 4-21, 2012.). Im Vergleich zu bodengebundenen Technologien hat die Erdbeobachtung, z. B. durch Satelliten, vor allem den Vorteil, dass sehr große Flächen in kurzen Intervallen aufgenommen und analysiert werden können.

Seit etwa einer Dekade erlebt insbesondere die Raumfahrt eine Revolution in Form der New Space Bewegung, die den Zugang zum Weltraum durch neue Ansätze - Miniaturisierung, Standardisierung und Nutzung von kommerziell erhältlichen Bauteilen - schneller, einfacher und vor allem günstiger macht als jemals zuvor (H. Heidt, J. Puig-Suari, A. S. Moore, S. Nakasuka, and R. J. Twiggs, "CubeSat: A new Generation of Picosatellite for Education and Industry Low-Cost Space Experimentation," AIAA/USU Conf. Small Satell., pp. 1-19, 2000; A. Toorian, K. Diaz, and S. Lee, "The CubeSat approach to space access," IEEE Aerosp. Conf. Proc., vol. 1, no. 1, 2008).

Die Nutzung von CubeSats (standardisierter Kleinsatelliten) (A. Marinan and K. Cahoy, "From CubeSats to Constellations: Systems Design and Performance Analysis," no. September, p. 116, 2013; C. Horch, M. Schimmerohn, and F. Schäfer, "Integrating a large nanosatellite from CubeSat components - Challenges and solutions," in 68th International Astronautical Congress (IAC), 2017; M. Swartwout, "The first one hundred CubeSats : A statistical look," J. Small Satell., vol. 2, no. 2, pp. 213-233, 2013; R. Nugent, R. Munakata, A. Chin, R. Coelho, and J. Puig-Suari, "The CubeSat: The picosatellite standard for research and education," Sp. 2008 Conf., no. September, pp. 1-11, 2008) ist dabei ein zentraler Bestandteil des New Space Ansatzes. Diese modular in Volumina von etwa einem Liter aufgebauten Satelliten werden für zunehmend anspruchsvollere Aufgaben verwendet (Banerdt et al., "InSight: A Discovery Mission to Explore the Interior of Mars," in 44th Lunar and Planetary Science Conference, 2013, p. 1915; R. Staehle, D. Blaney, and H. Hemmati, "Interplanetary CubeSats: Opening the Solar System to a Broad Community at Lower Cost," J. Small Satell., vol. 2, no. 1, pp. 161-186, 2013). Es existieren bereits heute mehrere Konstellationen von über hunderten solcher Satelliten für Anwendungen im Bereich der Erdbeobachtung und Kommunikation, und es wird erwartet, dass sich der Markt in den kommenden Jahren weiterhin schnell entwickeln wird (M. Swartwout, "CubeSats and Mission Success : 2016 Update," no. June, 2016; C. R. Boshuizen, J. Mason, P. Klupar, and S. Spanhake, "Results from the Planet Labs Flock Constellation," 28th Annu. AI-AA/USU Conf. Small Satell., pp. SSC14-I-1, 2014; Euroconsult, "Prospects for the Small Satellite Market," 2017).

Während das Design traditioneller Satellitenmissionen vor allem getrieben wurde von den technischen Anforderungen der sich an Bord befindlichen Geräte, so ist der derzeit verfolgte New Space Ansatz grundsätzlich verschieden. Bei diesem wird versucht innerhalb der verfügbaren Ressourcen eines CubeSats die maximale Leistungsfähigkeit der technischen Geräte an Bord zu realisieren. Diese Ressourcen sind vor allem beschränkt durch das verfügbare Volumen, die verfügbare Leistung und in einem kleineren Umfang auch die verfügbare Masse.

Satelliten - große Plattformen, Kleinstsatelliten wie CubeSats aber auch unbemannte Flugzeuge (UAV) und Drohnen - besitzen eine Positioniereinheit an Bord, die ihre Position relativ zur Erdoberfläche sowie ihre momentane Ausrichtung bestimmt. Dies ist gerade im Bereich der Erdbeobachtung von Interesse, da die aufgenommenen Daten später im Regelfall auf eine Karte projiziert werden, um sie weiter nutzbar zu machen (US20060041375A1). Dieser Schritt der Datenaufbereitung wird Georeferenzierung genannt und erfolgt meist über eine Kamera im sichtbaren Wellenlängenbereich. Hierbei können auch geometrische Verzerrungen durch die Projektion auf eine strukturierte Planetenoberfläche, eventuell weiter unterstützt durch Hinzuziehen eines digitalen Höhenmodells, korrigiert werden und diese Information im Anschluss auf die restlichen Detektoren/Sensoren an Bord übertragen werden. Die Übertragung geschieht bei bildgebenden Detektoren meist über die genaue Bestimmung der relativen Ausrichtung. Soll die Georeferenzierung von einem visuellen Sensor (bestimmt durch Abgleich von Features gegenüber einer existierenden, georeferenzierten Karte) auf einen Sensor im nichtsichtbaren Wellenlängenbereich übertragen werden, so wird zuvor genau bestimmt, welche Ausrichtung und welchen Sichtbereich beide Geräte relativ zueinander haben.

Nicht jeder Erdbeobachtungssatellit nimmt (Fernerkundungs-) Daten im sichtbaren Wellenlängenbereich auf. So gibt es eine Vielzahl von Satelliten, die im Radiospektrum (Terra SAR X, die ICEYE Konstellation, Radarsat-2, Sentinel-1) oder im infraroten Bereich (Sentinel-3, Landsat-7 und 8, CIRiS) Daten aufnehmen. Alle diese Satelliten haben gemein, dass sie über eine visuelle Nutzlast verfügen, um die Georeferenzierung durchzuführen. Dies kann mit folgenden technischen Problemen einhergehen
- Für Sythetic Aperture RADAR (SAR) Nutzlasten ist es aufgrund der seitlichen Blickrichtung der Instrumente generell erschwert, eine korrekte Georeferenzierung durchzuführen, da verstärkt geometrische Verzerrungen auftreten können (Schatten, Perspektivität bzw. Verkürzung, Überlappung) (M. Esmaeilzade, J. Amini, and S. Zakeri, "Georeferencing on synthetic aperture radar imagery," Int. Arch. Photogramm. Remote Sens. Spat. Inf. Sci. - ISPRS Arch., vol. 40, no. 1W5, pp. 179-184, 2015) und DE 10 2016 123 286 B4).
- Für kleine Satelliten, deren Hauptnutzlast nicht im sichtbaren Bereich aufnimmt, bedeutet eine zusätzliche sichtbare Kamera eventuell substanziell höheren Energie- und Volumenbedarf. Dies kann letztendlich dazu führen, dass eine größere Satellitenstruktur verwendet werden muss als ursprünglich geplant. Bei Kosten von derzeit etwa EUR 35.000 - 60.000 pro Kilogramm im (niedrigen) Erdorbit kann dies zu erheblichen zusätzlichen Kosten in Bezug auf das verfügbare Budget der Gesamtmission führen.

Für den Fall, dass die zu referenzierenden Daten in einem Spektralbereich aufgenommen wurden, in welchem eine starke Veränderung auf kurzer Zeitskala anzunehmen ist (häufig beispielweise Infrarot (IR)), so kann nicht davon ausgegangen werden, dass es Karten- oder anderes Referenzmaterial gibt, gegen welches referenziert werden könnte. Somit lassen sich Standardmethoden zur Georeferenzierung nicht einsetzen. Folgende Lösungswege sind deshalb denkbar:
Wie bereits angedeutet wird im Regelfall versucht, die Georeferenzierung durch simultan aufgenommene Daten im sichtbaren Wellenlängenbereich zu ermöglichen. Hier wird angestrebt, die Kameras weiter zu miniaturisieren, um möglichst wenig Platz und möglichst geringe Leistungsaufnahme zu erreichen. Durch die Anforderungen an die Auflösung und damit auch an die Genauigkeit der Georeferenzierung ist allerdings eine physikalische Grenze gesetzt für die Größe der Apertur der entsprechenden Kameras und damit auch für das minimal benötigte Volumen.

Im Fall der Nutzung einer zweiten Kamera im visuellen Bereich muss für eine ordnungsgemäße Funktion zudem die relative Blickrichtung zwischen der primären Nutzlast und der für die Georeferenzierung genutzten Nutzlast bekannt sein. Diese wird normalerweise durch entsprechende Manöver mit Blick in den Weltraum und vorhandenen Sternenkarten realisiert, was mit einem erhöhten technischen Aufwand einhergeht. Das kann auch an Bord geschehen, indem Objekte betrachtet werden, die in beiden Wellenlängenbereichen ähnliche Features aufzeigen, bspw. Himmelskörper wie die Sonne oder der Mond, die sich gegenüber dem Hintergrund im sichtbaren wie auch im nichtsichtbaren Spektralbereich abgrenzen.

Im Bereich von Drohnen und niedrig fliegenden UAVs werden zudem GPS Sensoren gepaart mit inertialen Messeinheiten verwendet, um die Positionsgenauigkeit zu erhöhen (F. S. Leira, K. Trnka, T. I. Fossen, and T. A. Johansen, "A ligth-weight thermal camera payload with georeferencing capabilities for small fixed-wing UAVs," 2015 Int. Conf. Unmanned Aircr. Syst. ICUAS 2015, pp. 485-494, 2015). Doch auch die genaue Kenntnis der Position des Fluggeräts lässt noch keine wirklichen Aussagen zu über die Blickrichtung des Sensors.

Behling Robert et al: "Robust Automated Image Co-Registration of Optical Multi-Sensor Time Series Data: Database Generation for Multi-Temporal Landslide Detection" in Remote Sensing, Bd. 6, Nr. 3, 21-03-2014, S. 2572-2600, DOI: 10.3390/rs6032572 beschreibt eine Erkennung von Erdrutschen über längere Zeiträume hinweg. Zu diesem Zweck wird eine Methode zur vollautomatischen Bild Koregistrierung entwickelt.

Aufgabe der folgenden Erfindung ist es daher, ein Verfahren zur Georeferenzierung von Fernerkundungsdaten anzugeben, das eine Reduzierung der erforderlichen Nutzlast bei gleichzeitigem Erhalten einer hohen Genauigkeit ermöglicht.

Diese Aufgabe wird gelöst durch das Verfahren zur Georeferenzierung von Fernerkundungsdaten einer Fernerkundungsplattform nach Anspruch 1. Die abhängigen Ansprüche geben vorteilhafte Weiterbildungen des erfindungsgemäßen Verfahrens zur Georeferenzierung an.

Erfindungsgemäß wird ein Verfahren zur Georeferenzierung von Fernerkundungsdaten angegeben, die von einer Fernerkundungsplattform aufgenommen werden. Die Fernerkundungsdaten sind dabei Daten, welche die Fernerkundungsplattform ermittelt, beispielsweise als Ergebnisse von Messungen oder Vermessungen. Derartige Messungen können beispielsweise Eigenschaften der Erdoberfläche oder der Atmosphäre abbilden, sodass die Fernerkundungsdaten Abbildungen der entsprechenden Eigenschaften sein können. Die Fernerkundungsdaten können dabei durch die Fernerkundungsplattform insbesondere ortsaufgelöst ermittelt werden. Hierbei kann jedem Punkt eines räumlichen oder flächigen Vermessungsgebiets ein Wert der entsprechenden Eigenschaft zugeordnet werden. Die Fernerkundungsdaten können insbesondere zeitabhängige Daten sein, also Daten, die sich mit der Zeit ändern können und/oder zeitlich variabel sind. Zum Beispiel sind Daten, welche Eigenschaften der Atmosphäre abbilden oft zeitlich variabel, da die entsprechen Eigenschaften der Atmosphäre zeitlich variabel sind. Auch Infrarotdaten, die beispielsweise eine Temperaturverteilung der Erdoberfläche oder der Atmosphäre abbilden können, sind häufig zeitlich variabel, da sie in vielen Fällen von der Sonneneinstrahlung abhängen. Auch Veränderungen der Vegetation und menschliches Verhalten können zu einer zeitlichen Variation von Fernerkundungsdaten führen.

Die Fernerkundungsdaten können vorteilhaft in Matrixform vorliegen, sodass sie beispielsweise auf einem regelmäßigen Raster als Bild dargestellt werden können. Die Intensität eines jeden Werts in der Matrix oder jedes Pixels im Bild kann dann Auskunft über die Amplitude der gemessenen physikalischen Größe liefern, wie beispielsweise die spektrale Dichte, Energiedichte, etc.

Erfindungsgemäß wird durch die Fernerkundungsplattform ein Fernerkundungsdatensatz aufgenommen, der einen als Sichtbereich bezeichneten Bereich der Erdoberfläche abbildet. Der Fernerkundungsdatensatz enthält dabei Fernerkundungsdaten. Als Sichtbereich der Erdoberfläche kann jener Teilbereich der Erdoberfläche angesehen werden, aus dessen Richtung elektromagnetische Strahlung in einen zur Ermittlung des Fernerkundungsdatensatzes verwendeten Sensor eintritt. Es sei angemerkt, dass nicht zwingend erforderlich ist, dass die elektromagnetischen Wellen von der Erdoberfläche selbst ausgehen. Bei Vermessungen der Atmosphäre können die elektromagnetischen Wellen auch oberhalb der Erdoberfläche erzeugt werden. Sie treffen jedoch dennoch aus Richtung eines bestimmten Bereichs oder Punktes der Erdoberfläche in den Sensor ein.

Erfindungsgemäß wird außerdem ein Referenzdatensatz ermittelt, dessen Georeferenzierung bekannt ist. Der Referenzdatensatz enthält also Werte einer Eigenschaft eines bestimmten Bereichs oder Punktes der Erdoberfläche, von denen bekannt ist, aus Richtung welches Punktes der Erdoberfläche sie aufgenommen wurden. Der Referenzdatensatz wird dabei so ermittelt, dass er einen Bereich der Erdoberfläche abbildet, welcher mit dem Sichtbereich wie oben definiert zumindest bereichsweise überlappt. Die Schnittmenge zwischen dem Sichtbereich und jenem Bereich, den der Referenzdatensatz abbildet, ist also nicht leer.

Vorteilhafterweise wird der Referenzdatensatz in kurzem zeitlichem Abstand zu den Fernerkundungsdaten aufgenommen. Vorteilhafterweise wird der Referenzdatensatz in einem zeitlichen Abstand zu den Fernerkundungsdaten aufgenommen von maximal 24 Stunden, bevorzugt maximal 12 Stunden, bevorzugt maximal 6 Stunden, bevorzugt maximal 1 Stunde, bevorzugt maximal 10 Minuten, bevorzugt maximal 1 Minute, bevorzugt maximal 10 Sekunden, bevorzugt maximal 5 Sekunden oder gleichzeitig. Der maximale zeitliche Abstand kann insbesondere so gewählt werden, dass Änderungen der durch den Fernerkundungsdatensatz und/oder den Referenzdatensatz aufgenommenen physikalischen Daten in diesem Abstand einen vorgegebenen Schwellenwert nicht übersteigen. Der Schwellenwert kann zum Beispiel so gewählt werden, dass noch eine Konvergenz des Verfahrens erwartet werden kann. Er kann zum Beispiel durch Simulation oder aufgrund früherer Messungen festgelegt werden. Mit dem Schwellenwert kann ein aus dem entsprechenden Datensatz ermittelter Wert verglichen werden, zum Beispiel ein Mittelwert einiger oder aller Pixel. Auch andere charakteristische Werte sind möglich.

Eine zeitliche Überlappung der Messungen kann abhängig sein von der zu beobachtenden Messgröße. Werden beispielsweise Strahldichten im Infraroten Spektralbereich gemessen, so fluktuieren diese häufig auf einer relativ kurzen Zeitskala von wenigen Sekunden bis Minuten und das Ergebnis kann sich verschlechtern, wenn die zu vergleichenden Aufnahmen nicht zeitlich nah beieinander liegen. Im Fall einer solchen starken zeitlichen Varianz kann nicht wie normalerweise angesetzt gegenüber vorhandenen Karten georeferenziert werden, weil nicht davon ausgegangen werden kann, dass die sich auf der Karte vorhandenen Features im von Plattform A aufgenommenen Bild wiederfinden werden. Es gibt deshalb beispielsweise keine Infrarot-Karte der Erde, auf die man sich beziehen könnte

Der Fernerkundungsdatensatz und der Referenzdatensatz können vorteilhafterweise Rasterdaten sein und optional unterschiedliche Auflösungen haben.

Erfindungsgemäß werden nun zwei Anpassungsschritte wiederholt ausgeführt. Dabei werden in einem ersten Anpassungsschritt der Fernerkundungsdatensatz und der Referenzdatensatz miteinander verglichen und dann in einem zweiten Anpassungsschritt basierend auf dem Vergleich eine Morphologieoperation auf den Fernerkundungsdatensatz oder den Referenzdatensatz angewandt. Eine Morphologieoperation ist dabei eine Abbildung des entsprechenden Datensatzes von einer Eingangsgeoreferenzierung in eine Ausgangsgeoreferenzierung. Derartige Morphologieoperationen können beispielsweise Translation, Rotation und/oder perspektivische Verzerrungen des Bildes sein.

Es werden dann der erste Anpassungsschritt und der zweite Anpassungsschritt abwechselnd so lange wiederholt, bis sich im ersten Anpassungsschritt in dem beschriebenen Vergleich des Fernerkundungsdatensatzes mit dem Referenzdatensatz nach Anwendung der vorangegangenen Morphologieoperation als Abbruchbedingung ergibt, dass sich der Fernerkundungsdatensatz und der Referenzdatensatz um weniger als eine vorgegebene Schwelle voneinander unterscheiden. Im Falle des Eintretens der Abbruchbedingung wird dann die Georeferenzierung des Referenzdatensatzes als Georeferenzierung des Fernerkundungsdatensatzes nach Anwendung der Morphologietransformationen gesetzt. Es wird dabei die Georeferenzierung des Referenzdatensatzes als Georeferenzierung des Fernerkundungsdatensatzes nach Anwendung aller zuvor ausgeführten Morphologietransformationen gesetzt, wobei eine oder mehrere Morphologietransformationen ausgeführt worden sein können. In dem beschriebenen zweiten Anpassungsschritt kann die Morphologieoperation auf den Fernerkundungsdatensatz oder den Referenzdatensatz oder auf beide angewendet werden. Bei Eintreten der Abbruchbedingung liegt daher einer oder beide der Datensätze durch Morphologieoperationen transformiert vor. Zur Bestimmung der Georeferenzierung des Fernerkundungsdatensatzes kann dann auf die tatsächliche Georeferenzierung des Fernerkundungsdatensatzes mit den ausgeführten Morphologieoperationen zurückgerechnet werden.

Die Erfindung nutzt also eine kooperative Strategie, die besonders im Bereich kleiner Satelliten, jedoch nicht ausschließlich in diesem Bereich, eine sehr gute Georeferenzierung erreicht und trotzdem kein zusätzliches Gewicht, Volumen und Leistung in der Fernerkundungsplattform bewirkt.

Die Fernerkundungsdaten können dabei in jedem möglichen Spektralbereich aufgenommen worden sein, beispielsweise können es Radar-, Infrarot-, UV- oder Mikrowellenmessungen sein. Geometrische Verzerrungen des Sensors, die durch eine Optik verursacht werden können, sind normalerweise bekannt und können dabei bereits berücksichtigt werden. Besonders vorteilhaft ist die Erfindung auf Spektralbereiche anwendbar, in denen die beobachtete Größe variabel ist, also zum Beispiel im Infrarotbereich. In einer vorteilhaften Ausgestaltung der Erfindung werden die Fernerkundungsdaten im Infrarotbereich aufgenommen. Diese Daten liegen oft als Rasterdaten vor. Eine vorteilhafte Ausgestaltung der Erfindung ermöglicht die Georeferenzierung von Fernerkundungsdaten, die als Rasterdaten vorliegen, mit einem Referenzdatensatz, der ebenfalls als Rasterdaten vorliegen. Unter Rasterdaten werden solche Daten verstanden, die als pixelweise aufgenommenen Daten vorliegen. Hier enthält also jeder Pixel zumindest einen Wert zumindest einer physikalischen Größe, die durch den Datensatz dargestellt wird. Ein Temperaturdatensatz könnte zum Beispiel in jedem Pixel einen Temperaturwert enthalten.

Vorteilhafterweise enthält der Referenzdatensatz Fernerkundungsdaten im gleichen Spektralbereich wie der Fernerkundungsdatensatz, die bereits erfolgreich georeferenziert sind. Durch die Existenz von großen nationalen Erdbeobachtungsprogrammen wie beispielsweise der EU (Copernicus) oder der USGS (Landsat Data Continuity Mission) stehen solche Daten routinemäßig frei zur Verfügung. Sollten keine Informationen im selben Spektralbereich vorliegen, die aufgenommenen Spektralbereich von Plattform A und Referenzplattform sich also nicht überlappen, so können verschiedene Ansätze gewählt werden, um die fehlenden spektralen Informationen zu interpolieren [siehe Houborg, R., & McCabe, M. F. (2018). A Cubesat enabled Spatio-Temporal Enhancement Method (CESTEM) utilizing Planet, Landsat and MO-DIS data. Remote Sensing of Environment, 209(February), 211-226. https://doi.org/10.1016/j.rse.2018.02.067 und darin enthaltene Referenzen.]

Eine Besonderheit von Datensätzen im langwelligen Spektralbereich, wie z.B. Infrarot, ist darüber hinaus die Tatsache, dass es sich aufgrund der langen Wellenlänge normalerweise um deutlich niedriger aufgelöste Daten als im sichtbaren Bereich handelt. Während im sichtbaren Bereiche Auflösungen von besser als einem Meter erreicht werden können, ist bspw. die höchste im zivilien Bereich erhältliche Auflösung (also die Größe eines Pixels auf den Boden in Nadir Richtung projiziert) von thermischen Infrarotdaten durch Satellitenplattformen bei derzeit 60 m. Bei dieser groben Auflösung ist ersichtlich, dass nicht davon ausgegangen werden kann, dass einzelne Merkmale wie Straßenkreuzungen, Schornsteine, oder andere Objekte gegeneinander referenziert werden können. Aufgrund er geringen zu erwartenden Pixelmenge im langwelligen Spektralbereich wird deshalb vorzugsweise auf Pixel-Ebene referenziert.

In einer vorteilhaften Ausgestaltung der Erfindung können zum Vergleichen im beschriebenen ersten Anpassungsschritt eine räumliche Auflösung des Fernerkundungsdatensatzes und eine räumliche Auflösung des Referenzdatensatzes in Übereinstimmung gebracht werden. Als räumliche Auflösung kann dabei die Anzahl der Pixel, für die Messdaten vorliegen, pro Flächenelement auf der Erdoberfläche angesehen werden.

Besonders vorteilhaft ist es dabei, die Auflösung desjenigen aus Fernerkundungsdatensatz und Referenzdatensatz, der die höhere Auflösung hat, auf die Auflösung des anderen Datensatzes zu verringern. Hat also der Fernerkundungsdatensatz die höhere Auflösung, so kann dessen Auflösung auf die Auflösung des Referenzdatensatzes reduziert werden. Hat hingegen der Referenzdatensatz die höhere Auflösung, so kann dessen Auflösung auf die Auflösung des Fernerkundungsdatensatzes reduziert werden. Es sei jedoch angemerkt, dass dies nicht zwingend ist. Auch eine Erhöhung der Auflösung ist möglich, wenn hierfür zusätzliche Informationen integriert werden.

Vorteilhafterweise werden die Auflösungen mit Bezug auf das gleiche Bezugssystem in Übereinstimmung gebracht. Hierzu können die Datensätze so angepasst werden, dass alle Pixelkanten dieselbe georeferenzierte Position besitzen. Alle Kanten von Pixeln des Datensatzes mit der geringeren Auflösung liegen dabei vorteilhafterweise auf Kanten von Pixeln des Datensatzes mit der höheren Auflösung mit der gleichen georeferenzierten Position.

Vorteilhafterweise können der Fernerkundungsdatensatz und der Referenzdatensatz Werte zumindest einer Messgröße sein, wobei die Werte in Pixeln vorliegen. Zum Vergleichen im beschriebenen ersten Anpassungsschritt kann dann ein Differenzdatensatz aus dem Fernerkundungsdatensatz und dem Referenzdatensatz gebildet werden. Der Differenzdatensatz kann dabei eine Anzahl an Pixeln haben, die gleich ist einer Anzahl an Pixeln desjenigen Datensatzes, der die geringere Auflösung hat oder eine Anzahl an Pixeln gleich jener des Datensatzes mit der verringerten Auflösung. Haben beide Datensätze die gleiche Auflösung, beispielsweise weil die Auflösungen aneinander angepasst wurden, so hat der Differenzdatensatz eine Anzahl an Pixeln, die gleich der Anzahl der Pixel eines der Datensätze ist.

Im Folgenden soll i die Positionen von Pixeln des Differenzdatensatzes benennen. Die Positionen der Pixel des Differenzdatensatzes können also mit i gezählt werden. In einer vorteilhaften Ausgestaltung kann für alle Positionen i von Pixeln des Referenzdatensatzes jener Pixel mit der Position i des Differenzdatensatzes als Wert die Differenz zwischen dem Wert des Pixels des Fernerkundungsdatensatzes mit der gleichen Position (die auch i genannt werden kann) und dem Wert des Pixels des Referenzdatensatzes mit der gleichen Position (der ebenfalls i genannt werden kann) haben.

Wie beschrieben kann als Abbruchbedingung für die Anpassungsschritte verwendet werden, dass sich der Fernerkundungsdatensatz und der Referenzdatensatz um weniger als eine vorgegebene Schwelle voneinander unterscheiden. In einer vorteilhaften Ausgestaltung der Erfindung kann die Schwelle ein Schwellenwert sein, der mit einem Wert verglichen wird, der aus den Werten der Pixel des Fernerkundungsdatensatzes und des Referenzdatensatzes berechnet wird. Grundsätzlich gibt es viele Möglichkeiten, einen solchen Wert zu definieren, der mit dem Schwellenwert verglichen wird. Besonders vorteilhaft ist ein Wert, der sich berechnet als Diff = √(Σ_{_i} (I_{A,i} - I_{Ref,i})²), wobei I_{A,i} der Wert des Pixels an der Position i des Fernerkundungsdatensatzes ist und I_{Ref,i} der Wert des Pixels an der Position i des Referenzdatensatzes ist.

In einer vorteilhaften Ausgestaltung der Erfindung können vor dem ersten Anpassungsschritt eine Kalibrierung des Fernerkundungsdatensatzes und eine Kalibrierung des Referenzdatensatzes aneinander angeglichen werden. Hierdurch kann die Genauigkeit des Vergleichs erhöht werden. Es sei jedoch angemerkt, dass eine Kalibrierung nicht zwingend erforderlich ist, da die meisten Minimierungsverfahren, die zum Angleich verwendet werden können, auch dann eine Minimierung ermöglichen, wenn die verglichenen Werte gegeneinander verschoben sind.

In einer vorteilhaften Ausgestaltung der Erfindung kann zur Ermittlung des Referenzdatensatzes eine Vorab-Georeferenzierung der Fernerkundungsplattform geschätzt werden. Hierdurch kann schneller ein Referenzdatensatz ermittelt werden, der mit dem von der Fernerkundungsplattform beobachteten Bereich überlappt. Eine Schätzung kann zum Beispiel anhand von Positionierungsdaten an Bord erfolgen, also beispielsweise durch GPS oder durch ein Attitude Determination System (ADS), anhand des Erdmagnetfelds oder mittels einer Sternenkamera. Ein möglicher konkreter Ansatz hierzu kann zum Beispiel die Verwendung von Bahnelementdaten des Satelliten sein, die normalerweise in Form von *two-line elements* (TLE) vorhanden sind. Es kann dann eine entsprechende Propagationssoftware auf Basis des für TLEs verwendeten SGB4-Propagators verwendet werden. Die Bahnelementdaten können sich aus der durch GPS und Bodenmessungen aufgezeichneten Bahn des Satelliten ergeben und erlauben eine relativ genaue Bestimmung der Position bis etwa zwei Wochen in die Zukunft (als Daumenregel gilt hier etwa eine Sekunde Abweichung alle 48 Stunden). Als Propagationssoftware können verschiedene Softwarelösungen oder Bibliotheken infrage kommen, darunter beispielsweise Skyfield, das Open Source ist und in Python geschrieben ist, AGI's STK, Orekit, das in Java geschrieben ist und Open Source ist. Ist dann die Orientierung der Fernerkundungsplattform, beispielsweise durch das ADS bekannt (ohne Sternenkamera normalerweise auf 1 ° pro Achse, mit Sternenkamera bis auf 0,01 ° pro Achse), kann dadurch eine grobe Schätzung der Georeferenzierung erfolgen.

Das erfindungsgemäße Verfahren basiert auf einem Anpassungsverfahren mit dem beschriebenen ersten und zweiten Anpassungsschritt. Diese Anpassungsschritte können vorteilhafterweise zielgerichtet ausgeführt werden, um zu einer schrittweisen Optimierung zu kommen. Es stehen verschiedene Algorithmen zur Verfügung, die eine solche schrittweise Optimierung als Funktion mehrerer Variablen, beispielsweise Translation in zwei Dimensionen, Rotation, Verzerrung etc. unterstützen. Ein geeignetes Verfahren ist beispielsweise die Nelder-Mead Simplex-Methode (J. C. Lagarias, J. A. Reeds, M. H. Wright, and P. E. Wright, "Convergence properties of the Nelder-Mead simplex method in low dimensions," SIAM J. Optim., vol. 9, no. 1, pp. 112-147, 1998). Alternativ kann beispielsweise das Broyden-Fletcher-Goldfarb-Shanno-Verfahren (C. G. Broyden, "The convergence of a class of double-rank minimization algorithms 1. General considerations," IMA J. Appl. Math. (Institute Math. Its Appl., vol. 6, no. 1, pp. 76-90, 1970), der Davidon-Fletcher-Powell-Algorithmus (W. C. Davidon, "Variable metric method for minimization," SIAM Journal on Optimization, vol. 1, no. 1. pp. 1-17, 1991) oder sogenannte Trust Region-Ansätze (J. J. Moré and D. C. Sorensen, "Computing a Trust Region Step," SIAM Journal on Scientific and Statistical Computing, vol. 4, no. 3. pp. 553-572, 1983) zum Einsatz kommen.

Nimmt man an, dass sich die ursprünglich angenommene grobe Georeferenzierung in der Nähe der optimierten Georeferenzierung befindet, so konvergieren die genannten Verfahren zunehmend zur korrekten Lösung. Geht man von idealen Bilddaten ohne Fehler und Rauschen aus, so können im Idealfall bei korrekter Georeferenzierung beide Datensätze dasselbe Bild erhalten, sodass der Fehler Null ist. Im Fall von Infrarotsensoren lässt sich dies beispielsweise durch Energieerhaltung auch physikalisch explizit begründen (unter der Annahme, dass die Beobachtungswinkel nicht zu stark voneinander abweichen und die Aufnahmen innerhalb eines kurzen Zeitraums erfolgt sind). In realen Anwendungsszenarien wird normalerweise eine Restdifferenz bestehen bleiben. In anderen Spektralbereichen kann es vorteilhaft sein, zunächst entsprechende Normierungen vorzunehmen, um einen Vergleich der physikalischen Messgrößen beider Plattformen zu unterstützen.

Wie beschrieben können die Kalibrierungen der Datensätze aneinander angeglichen werden. Die Kalibrierung eines Datensatzes kann jedoch auch einen homogenen Offset gegenüber der Kalibrierung des anderen Datensatzes haben. Dies führt zu einem homogenen Offset über das gesamte Differenzbild.

Werden die Abweichungen symmetrisch um Null verteilt, so wird dieser Offset Null und es kann auch dann ein minimaler Fehler erreicht werden, wenn die Kalibrierung der Datensätze nicht aufeinander abgestimmt sind.

Zur Bewertung des Differenzbildes können verschiedene Metriken verwendet werden. Das erfindungsgemäße Verfahren funktioniert unabhängig von der Metrik. Genauso gibt es viele Möglichkeiten des Upsamplings. Auch ein eventuell vorhandener Versatz von Messwerten muss nicht zwingend herausgerechnet werden, kann aber auf verschiedene Weise herausgerechnet werden. Beispielsweise können bei Verwendung einer Zeilenkamera (Pushbroom- oder Whiskbroom-Scanner) verschiedene Zeitstempel der Pixel kombiniert werden und diese nach Zeit verschieden gewichtet werden. Auch könnte die Punktspreizfunktion (point spread function) der Sensoren genutzt werden, um eine veränderte Gewichtung der Pixel bei der Bildregistrierung einzuführen.

In einigen Fällen ist es auch möglich, dass Daten in unterschiedlichen Spektralbereichen für die Datensätze verwendet werden, wenn sich die entsprechende Charakteristik interpolieren lässt. Liegen beispielsweise Daten im Infrarotbereich vor, dessen Spektrum sich mit dem anderen Datensatz nur teilweise oder gar nicht überlappt, können über eine physikalische Modellierung anhand bekannter Gesetzmäßigkeiten wie dem Planck'schen Strahlungsgesetz Datensätze im benötigten Spektralbereich simuliert werden.

Vorteilhafterweise kann die Fernerkundungsplattform ein Satellit, ein unbemanntes Flugzeug oder eine Drohne sein.

Die Lösung bietet gegenüber vorhandenen Methoden den Vorteil, auf eine hochwertige Georeferenzierung von großen Plattformen zugreifen zu können, ohne dass eigener Kamera im sichtbaren Bereich an Bord vorhanden sein müssen.

Weitere Vorteile sind:
- Reduzierung der Anforderungen an Volumen, Masse und Energie von Satelliten und Flugkörpern, die eine Georeferenzierung benötigen, aber keine entsprechende bildgebende Hardware an Bord haben.
- Dadurch erfolgt Reduzierung der Kosten für Start und Betrieb.
- Für Satelliten, die über eine eigene Georeferenzierung verfügen, kann die Erfindung als wichtiger Test derselben dienen. Zudem kann durch die Zusammenführung verschiedener Georeferenzierungsquellen die Genauigkeit der Gesamtgeoreferenzierung erhöht werden.

Beispielhaft seien vier Anwendungsszenarien für den Ansatz der Erfindung genannt:
1. Das Einsparen von Hardware an Bord von Satelliten, die keine Aufnahmen im sichtbaren Wellenlängenbereich machen durch die kooperative Georeferenzierung.
2. Die Überprüfung und Validierung von bordeigener Georeferenzierung durch Hinzuziehen der kooperativen Georeferenzierung.
3. Die Verbesserung der Genauigkeit bordeigener Georeferenzierung durch zusätzliche Anwendung von kooperativer Georeferenzierung.
4. Der Einsatz von kooperativer Georeferenzierung zur Erhöhung der Redundanz bordeigener Systeme.

Als wichtiges Anwendungsgebiet ist die Anforderungsreduzierung bei Klein- und Kleinstsatelliten zu sehen.

Im Folgenden soll die Erfindung anhand einiger Figuren beispielhaft erläutert werden. Gleiche Bezugszeichen kennzeichnen dabei gleiche oder entsprechende Merkmale. Die in den Beispielen beschriebenen Merkmale können auch unabhängig von dem entsprechenden Beispiel realisiert werden und zwischen den Beispielen kombiniert werden.

Es zeigt
- Figur 1: einen Fernerkundungsdatensatz und einen Referenzdatensatz mit unterschiedlicher Auflösung
- Figur 2: einen Fernerkundungsdatensatz, ein Differenzbild, und mit angepasster Auflösung und
- Figur 3: Differenzbilder zwischen den Fernerkundungsdaten und den Referenzdaten.

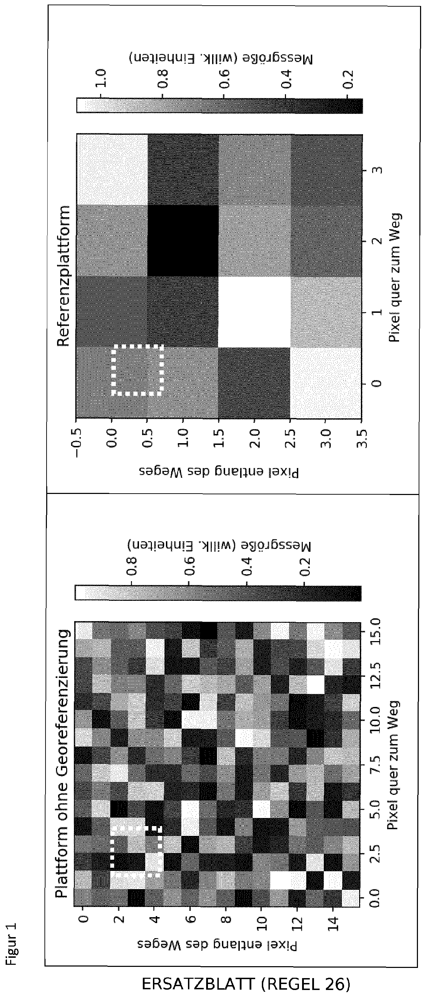

Figur 1 zeigt im linken Teilbild einen Fernerkundungsdatensatz, der hier beispielhaft als Matrix mit einer Vielzahl von Pixeln dargestellt ist. Jeder Pixel enthält einen Messwert, der hier durch eine Graustufe dargestellt ist. Der gezeigte Fernerkundungsdatensatz bildet einen Sichtbereich der Erdoberfläche ab, wobei in der vertikalen Richtung die Pixel entlang des Weges der Fernerkundungsplattform über die Erdoberfläche aufgetragen sind und auf der horizontalen Achse die Pixel quer zum Weg. Die Fernerkundungsdaten im linken Teilbild haben noch keine Georeferenzierung.

Das rechte Teilbild der Figur 1 zeigt einen Referenzdatensatz, dessen Georeferenzierung bekannt ist. Auch die Daten des Referenzdatensatzes sind als Pixel in Richtung entlang des Weges und quer zum Weg aufgetragen. Wiederum enthält jeder Pixel einen Wert der Messgröße, die vorteilhaft die gleiche Messgröße wie im linken Teilbild sein kann. Die räumliche Auflösung des Referenzdatensatzes im rechten Teilbild ist geringer als jene des Fernerkundungsdatensatzes im linken Teilbild, sodass die Pixel hier einen größeren Bereich der Erdoberfläche abbilden. Aufgabe des erfindungsgemäßen Verfahrens ist es, aus der Georeferenzierung des Referenzdatensatzes auf die Georeferenzierung des Fernerkundungsdatensatzes zu schließen.

Der im rechten Teilbild gezeigte Referenzdatensatz wurde so gewählt, dass der von dem Referenzdatensatz abgebildete Bereich der Erdoberfläche mit dem Sichtbereich des Fernermittlungsdatensatzes zumindest bereichsweise überlappt. Die gestrichelte Region zeigt die Summe der Pixel im Bild der Fernerkundungsdaten, die sich geografisch mit dem gestrichelt eingezeichneten Pixel der Referenzplattform überschneiden.

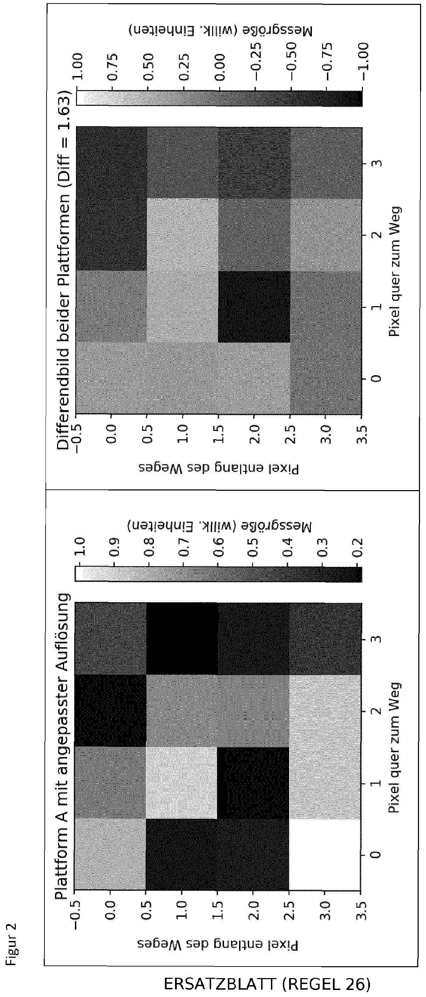

Figur 2 zeigt im linken Teilbild die Fernerkundungsdaten mit einer Auflösung, die an die Auflösung des Referenzdatensatzes angepasst wurde. Im gezeigten Fall wurde hierzu die Auflösung der Referenzdaten verringert. Eine solche Interpolation kann zum Beispiel durch einfache gewichtete Mittelung oder andere bekannte Methoden erfolgen. Es wird angenommen, dass für die aktuell angenommene Georeferenzierung alle Pixel des Fernerkundungsdatensatzes, die einen Flächenanteil an einem geografisch überlappenden Pixel des Referenzdatensatzes haben, mit in die Interpolation einbezogen werden (in Figur 1 exemplarisch für einen Pixel der Referenzplattform als gestricheltes Quadrat dargestellt).

Figur 2 zeigt im rechten Teilbild ein Differenzbild, das dadurch erhalten wurde, dass nach Angleichen der Auflösung die Werte der Pixel des Fernerkundungsdatensatzes von den Werten entsprechender Pixel des Referenzdatensatzes abgezogen wurden, wobei entsprechende Pixel solche sind, die die gleiche Position haben. Aus dem rechten Teilbild kann ein Wert berechnet werden, beispielsweise als Diff = √(Σ_{_i} (I_{A,i} - I_{Ref,i})²), wobei I_{A,i} der Wert des Pixels an der Position i des Fernerkundungsdatensatzes ist und I_{Ref,i} der Wert des Pixels an der Position i des Referenzdatensatzes. Im gezeigten Beispiel kann dieser Wert zum Beispiel Diff = 1,63 sein.

Es können nun systematisch Morphologieoperationen auf den Fernerkundungsdatensatz angewandt werden und wiederum das Differenzbild berechnet werden. Die Schritte des Vergleichens und des Anwendens von Morphologieoperationen werden so oft wiederholt, bis sich eine Abbruchbedingung ergibt, die darin besteht, dass sich der Fernerkundungsdatensatz und der Referenzdatensatz um weniger als eine vorgegebene Schwelle unterscheiden. Hierzu kann beispielsweise der Wert Diff wie oben definiert mit einem Schwellenwert verglichen werden. Morphologieoperationen können beispielsweise Translation, Rotation und/oder perspektivische Verzerrung des Bildes sein. Anstelle des beschriebenen Werts Diff kann auch eine Kreuzkorrelation oder eine andere Metrik verwendet werden, die das Differenzbild beschreibt. Dieser Wert kann zu einer Optimierungseinheit zurückgekoppelt werden, sodass der Wert iterativ optimiert werden kann, beispielsweise bis sich ein Wert von Diff = 0 ergibt. Hierzu kann beispielsweise eine Änderung der Eingangsparameter vorgenommen werden.

Die Differenz kann dabei in einigen Fällen sehr stark von der relativen Pixelposition abhängen und im Sub-Pixel Bereich fluktuieren, wie an folgendem eindimensionalen Beispiel dargestellt werden soll: Es soll ein IR-Datensatz georeferenziert werden, welcher einen etwa 1 Pixel (im Referenzdatensatz) großen Kühlturm eines Kraftwerks, der von Wasser umgeben ist, beinhaltet. Erschwerend kann hinzukommen, dass unter Umständen keine Sicherheit herrscht bei der absoluten Kalibrierung, so dass in solchen Fällen die absoluten Temperaturwerte, die sich aus den IR Daten ergäben, nicht als genau angenommen werden können. Gibt es bei der ursprünglichen Schätzung der Georeferenzierung nun einen Fehler von einem halben Pixel (nach Skalierung der Pixelgröße auf den Referenzdatensatz), so befindet sich der warme Turm jeweils zur Hälfte in einem Pixelgebiet, dessen andere Hälfte Wasser beinhaltet. Somit reduziert sich das Wärmesignal des Turms drastisch und der zu erwartende hohe Temperaturwert des Turms wird nicht gefunden. Bewegt sich das Raster nun durch entsprechende Morphologietransformationen, in diesem Fall eine reine Translation, so erscheint die Signatur des Kühlturms zunehmend stärker, bis nur noch ein einzelner Pixel den Turm umfasst. Dieses Beispiel soll auch darstellen, dass bei grober Auflösung nicht von festen Merkmalen ausgegangen werden kann, gegen die georeferenziert wird. Diese ergeben sich in vielen Fällen erst aus der Angleichung der Auflösungen. Für solche Situationen ist das iterative Verfahren gemäß der Erfindung, um zu einer passenden Georeferenzierung zu gelangen, vorteilhaft.

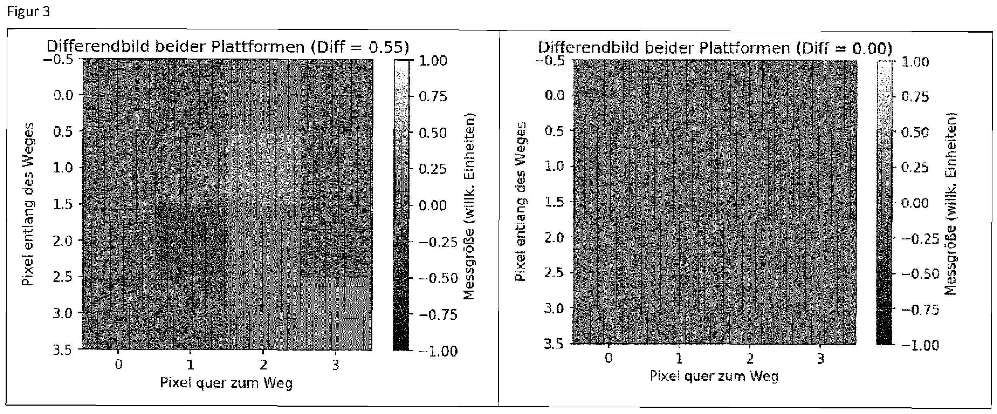

Eine solche iterative Verbesserung ist in Figur 3 gezeigt. Hier wurde die Verbesserung durch eine stückweise Translation des Fernerkundungsdatensatzes erreicht. Die gezielte Optimierung kann beispielsweise mittels der Nelder-Mead Simplex-Methode, des Broyden-Fletcher-Goldfarb-Shanno-Verfahrens, des Davidon-Fletcher-Powell-Algorithmus oder mittels Trust Region-Ansätzen erfolgen.

In Figur 3 zeigt das linke Teilbild das Differenzbildes entsprechend dem rechten Teilbild in Figur 2 nach einigen Iterationen. Es hat sich hierbei der Wert Diff wie oben definiert auf Diff = 0,55 reduziert. Durch weitere Iterationen kann im Idealfall der Wert Diff auf Diff = 0 optimiert werden, was im rechten Teilbild der Figur 3 dargestellt ist.

## Patentansprüche

1. Verfahren zur Georeferenzierung von Fernerkundungsdaten einer Fernerkundungsplattform,
wobei durch die Fernerkundungsplattform ein Fernerkundungsdatensatz aufgenommen wird, der einen Sichtbereich der Erdoberfläche abbildet,
ein Referenzdatensatz mit bekannter Georeferenzierung ermittelt wird, wobei der Referenzdatensatz einen Bereich der Erdoberfläche abbildet, welcher mit dem Sichtbereich zumindest bereichsweise überlappt,
wobei in einem ersten Anpassungsschritt der Fernerkundungsdatensatz und der Referenzdatensatz miteinander verglichen werden, und in einem zweiten Anpassungsschritt basierend auf dem Vergleich eine Morphologieoperation auf den Fernerkundungsdatensatz oder den Referenzdatensatz angewandt wird,
wobei der erste Anpassungsschritt und der zweite Anpassungsschritt solange wiederholt werden, bis sich im ersten Anpassungsschritt durch das Vergleichen als Abbruchbedingung ergibt, dass sich der Fernerkundungsdatensatz und der Referenzdatensatz um weniger als eine vorgegebene Schwelle voneinander unterscheiden,
und wobei im Falle des Eintretens der Abbruchbedingung die Georeferenzierung des Referenzdatensatzes als Georeferenzierung des Fernerkundungsdatensatzes nach Anwendung der zumindest einen ausgeführten Morphologieoperation gesetzt wird,
wobei zum Vergleichen im ersten Anpassungsschritt eine räumliche Auflösung des Fernerkundungsdatensatzes und eine räumliche Auflösung des Referenzdatensatzes in Übereinstimmung gebracht werden, wobei der Fernerkundungsdatensatz und der Referenzdatensatz in Pixeln vorliegende Werte zumindest einer Messgröße sind,
wobei zum Vergleichen im ersten Anpassungsschritt ein Differenzdatensatz aus dem Fernerkundungsdatensatz und dem Referenzdatensatz gebildet wird, der eine Anzahl an Pixeln aufweist, die gleich einer Anzahl an Pixeln des Datensatzes mit der verringerten Auflösung ist,
wobei für alle Positionen i ∈ {Menge aller Positionen von Pixeln des Differenzdatensatzes} von Pixeln des Differenzdatensatzes der Pixel mit der Position i des Differenzdatensatzes als Wert eine Differenz zwischen den Werten des Pixels des Fernerkundungsdatensatzes mit der gleichen Position i und des Pixels des Referenzdatensatzes mit der gleichen Position i hat.

2. Verfahren nach dem vorhergehenden Anspruch, wobei die Auflösung desjenigen aus Fernerkundungsdatensatz und Referenzdatensatz, der die höhere Auflösung hat, auf die Auflösung des anderen aus Fernerkundungsdatensatz und Referenzdatensatz verringert wird.

3. Verfahren nach einem der vorangehenden Ansprüche, wobei die Schwelle ein Schwellenwert ist, der mit dem Wert Diff = √(Σ_{_i} (I_{A,i} - I_{Ref,i})²) verglichen wird, wobei I_{A,i} der Wert des Pixels an der Position i des Fernerkundungsdatensatzes ist und I_{Ref,i} der Wert des Pixels an der Position i des Referenzdatensatzes.

4. Verfahren nach einem der vorhergehenden Ansprüche, wobei die Morphologietransformation zumindest eine Translation, zumindest eine Rotation und/oder zumindest eine perspektivische Verzerrung des entsprechenden Datensatzes beinhaltet.

5. Verfahren nach einem der vorhergehenden Ansprüche, wobei vor dem ersten Anpassungsschritt eine Kalibrierung des Fernerkungsdatensatzes und eine Kalibrierung des Referenzdatensatzes aneinander angeglichen werden.

6. Verfahren nach einem der vorhergehenden Ansprüche, wobei die Fernerkundungsplattform ein Satellit, ein unbemanntes Flugzeug oder eine Drohne ist.

7. Verfahren nach einem der vorhergehenden Ansprüche, wobei zur Ermittlung des Referenzdatensatzes eine Vorab-Georeferenzierung der Fernerkundungsplattform geschätzt wird.

8. Verfahren nach einem der vorhergehenden Ansprüche, wobei der Fernerkundungsdatensatz und der Referenzdatensatz im gleichen Spektralbereich aufgenommen sind.

9. Verfahren nach einem der vorhergehenden Ansprüche, wobei der der Fernerkundungsdatensatz und/oder der Referenzdatensatz im Infrarotbereich aufgenommen sind.

10. Verfahren nach einem der vorhergehenden Ansprüche, wobei der Referenzdatensatz in einem zeitlichen Abstand zu den Fernerkundungsdaten von maximal 24 Stunden, bevorzugt maximal 12 Stunden, bevorzugt maximal 6 Stunden, bevorzugt maximal 1 Stunde, bevorzugt maximal 10 Minuten, bevorzugt maximal 1 Minute, bevorzugt maximal 10 Sekunden, bevorzugt maximal 5 Sekunden oder gleichzeitig aufgenommen ist.

## Claims

1. A method for georeferencing remote sensing data of a remote sensing platform,
wherein a remote sensing data set is recorded by the remote sensing platform which depicts a visual range of the earth's surface,
a reference data set with known georeferencing is determined, wherein the reference data set depicts a portion of the earth's surface which overlaps at least partially with the visual range,
wherein in a first adjustment step the remote sensing data set and the reference data set are compared to each other, and in a second adjustment step, a morphology operation is applied to the remote sensing data set or the reference data set based on the comparison,
wherein the first adjustment step and the second adjustment step are repeated until it is determined in the first adjustment step by comparing as a termination condition that the remote sensing data set and the reference data set differ from each other by less than a predefined threshold,
and wherein, in the event of the termination condition occurring, the georeferencing of the reference data set is set as the georeferencing of the remote sensing data set after application of the at least one executed morphology operation,
wherein a spatial resolution of the remote sensing data set and a spatial resolution of the reference data set are brought into correspondence for comparison in the first adjustment step,wherein the remote sensing data set and the reference data set are values given in pixels of at least one measurement parameter,
wherein for comparison in the first adjustment step a difference data set is created from the remote sensing data set and the reference data set having a number of pixels equal to a number of pixels of the data set with the reduced resolution,
wherein for all positions i ∈ {amount of all positions of pixels of the difference data set} of pixels of the difference data set, the pixel with position i of the difference data set has as its value a difference between the values of the pixel of the remote sensing data set with the same position i and the pixel of the reference data set with the same position i.

2. The method according to the preceding claim, wherein the resolution of the one of the remote sensing data set and the reference data set having the higher resolution is reduced to the resolution of the other of the remote sensing data set and the reference data set.

3. The method according to any one of the preceding claims, wherein the threshold is a threshold value which is compared to the value Diff = √(Σ_{_i} (I_{A,i} - I_{Ref,i})²), wherein I_{A,i} is the value of the pixel at position i of the remote sensing data set and I_{Ref,i} is the value of the pixel at position i of the reference data set.

4. The method according to any one of the preceding claims, wherein the morphology transformation includes at least one translation, at least one rotation and/or at least one perspective distortion of the corresponding data set.

5. The method according to any one of the preceding claims, wherein a calibration of the remote sensing data set and a calibration of the reference data set are adapted to each other prior to the first adjustment step.

6. The method according to any one of the preceding claims, wherein the remote sensing platform is a satellite, an unmanned aerial vehicle or a drone.

7. The method according to any one of the preceding claims, wherein a preliminary georeferencing of the remote sensing platform is estimated for determination of the reference data set.

8. The method according to any one of the preceding claims, wherein the remote sensing data set and the reference data set are recorded in the same spectral range.

9. The method according to any one of the preceding claims, wherein the remote sensing data set and/or the reference data set are recorded in the infrared range.

10. The method according to any one of the preceding claims, wherein the reference data set is recorded at a time interval from the remote sensing data of at most 24 hours, preferably at most 12 hours, preferably at most 6 hours, preferably at most 1 hour, preferably at most 10 minutes, preferably at most 1 minute, preferably at most 10 seconds, preferably at most 5 seconds or simultaneously.

## Revendications

1. Procédé de géoréférencement de données de télédétection d'une plateforme de télédétection,
dans lequel un jeu de données de télédétection, qui représente une région de vision de la surface de la Terre, est relevé par une plate-forme de télédétection,
un jeu de données de référence comprenant un géoréférencement connu est déterminé, dans lequel le jeu de données de référence représente une région de la surface de la terre qui chevauche au moins partiellement la région de vision,
dans lequel, dans une première étape d'adaptation, le jeu de données de télédétection et le jeu de données de référence sont comparés, et, dans une deuxième étape d'adaptation, une opération morphologique est appliquée au jeu de données de télédétection ou au jeu de données de référence en se basant sur ladite comparaison,
dans lequel la première étape d'adaptation et la deuxième étape d'adaptation sont répétées jusqu'à obtenir une condition d'abandon, qui est que le jeu de données de télédétection et le jeu de données de référence diffèrent l'un de l'autre de moins d'un seuil prédéfini, grâce à la comparaison dans la première étape d'adaptation,
et dans lequel, en cas de survenance de la condition d'abandon, le géoréférencement du jeu de données de référence est défini comme géoréférencement du jeu de données de télédétection après l'application de la au moins une opération morphologique mise en œuvre,
dans lequel une résolution spatiale du jeu de données de télédétection et une résolution spatiale du jeu de données de référence sont mises en correspondance aux fins de la comparaison de la première étape d'adaptation, dans lequel le jeu de données de télédétection et le jeu de données de référence sont des valeurs, disponibles en pixels, d'au moins une grandeur de mesure,
dans lequel un jeu de données de différence, présentant un nombre de pixels égal à un nombre de pixels du jeu de données présentant la résolution réduite, est formé à partir du jeu de données de télédétection et du jeu de données de référence aux fins de la comparaison de la première étape d'adaptation,
dans lequel, pour toutes les positions i ∈ {ensemble de toutes les positions de pixels du jeu de données de différence} de pixels du jeu de données de différence, le pixel présentant la position i du jeu de données de différence a comme valeur une différence entre les valeurs du pixel du jeu de données de télédétection présentant la même position i et du pixel du jeu de données de référence présentant la même position i.

2. Procédé selon la revendication précédente, dans lequel la résolution de celui, d'entre le jeu de données de télédétection et le jeu de données de référence, qui a la résolution la plus élevée est réduite à la résolution de l'autre jeu de données d'entre le jeu de données de télédétection et le jeu de données de référence.

3. Procédé selon l'une quelconque des revendications précédentes, dans lequel le seuil est une valeur de seuil qui est comparée à la valeur Diff = √(Σ_i (I_{A,i} - I_{Ref,i})²), dans lequel I_{A,i} est la valeur du pixel au niveau de la position i du jeu de données de télédétection et I_{Ref,i} est la valeur du pixel au niveau de la position i du jeu de données de référence.

4. Procédé selon l'une quelconque des revendications précédentes, dans lequel la transformation morphologique comprend au moins une translation, au moins une rotation et/ou au moins une distorsion de perspective du jeu de données correspondant.

5. Procédé selon l'une quelconque des revendications précédentes, dans lequel, avant la première étape d'ajustement, un étalonnage du jeu de données de télédétection et un étalonnage du jeu de données de référence sont uniformisés.

6. Procédé selon l'une quelconque des revendications précédentes, dans lequel la plate-forme de télédétection est un satellite, un avion sans pilote ou un drone.

7. Procédé selon l'une quelconque des revendications précédentes, dans lequel un géoréférencement préalable de la plate-forme de télédétection est estimé afin de déterminer le jeu de données de référence.

8. Procédé selon l'une quelconque des revendications précédentes, dans lequel le jeu de données de télédétection et le jeu de données de référence sont relevés dans le même domaine spectral.

9. Procédé selon l'une quelconque des revendications précédentes, dans lequel le jeu de données de télédétection et/ou le jeu de données de référence sont relevés dans le domaine infrarouge.

10. Procédé selon l'une quelconque des revendications précédentes, dans lequel le jeu de données de référence est relevé à un intervalle temporel par rapport au données de télédétection de 24 heures au maximum, de manière préférée de 12 heures au maximum, de manière préférée de 6 heures au maximum, de manière préféré de 1 heure au maximum, de manière préférée de 10 minutes au maximum, de manière préférée de 1 minute au maximum, de manière préférée de 10 secondes au maximum, de manière préférée de 5 secondes au maximum ou simultanément.
